(19) Europäisches Patentamt
European Patent Office
Office européen des brevets

(11) **EP 4 431 222 B1**

(12) **EUROPEAN PATENT SPECIFICATION**

(45) Date of publication and mention
of the grant of the patent:
**14.05.2025 Bulletin 2025/20**

(21) Application number: **23161830.7**

(22) Date of filing: **14.03.2023**

(51) International Patent Classification (IPC):
**B23K 37/003** (2025.01)    **B23K 26/70** (2014.01)

(52) Cooperative Patent Classification (CPC):
**B23K 26/703; B23K 37/003**

(54) **PREDICTIVE COOLING FOR A LASER PROCESSING DEVICE**

PRÄDIKTIVE KÜHLUNG FÜR EINE LASERBEARBEITUNGSVORRICHTUNG

REFROIDISSEMENT PRÉDICTIF POUR UN DISPOSITIF DE TRAITEMENT LASER

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**18.09.2024 Bulletin 2024/38**

(73) Proprietor: **Raylase GmbH
82234 Wessling (DE)**

(72) Inventors:
• **Wiedmann, Manuel
86926 Greifenberg (DE)**
• **Stocker, Alexander
82237 Wörthsee (DE)**

(74) Representative: **Araujo Edo, Mario
Boehmert & Boehmert
Anwaltspartnerschaft mbB
Pettenkoferstraße 22
80336 München (DE)**

(56) References cited:
**DE-B4- 112013 007 410    KR-B1- 101 418 054
US-A1- 2021 104 860    US-A1- 2022 040 795**

## Description

FIELD OF THE INVENTION

The present invention is in the field of laser processing. In particular, the invention refers to a cooling control unit for controlling a cooling system of a laser processing device, to a laser system comprising such laser processing device and to a corresponding method for controlling a laser system including a cooling system.

BACKGROUND OF THE INVENTION

In a laser system used to laser process a workpiece, for example by means of 3-D printing or laser-welding, thermal dissipation may cause temperature variations of the components of the laser system and, ultimately, precision loss. For this reason, cooling systems are employed for providing thermal stability in order to prevent such losses of laser precision. Such cooling systems typically use a controlled flow of a cooling fluid, mostly water or air. Thermal stability is then provided by controlling the temperature and/or flowing conditions of the cooling fluid.

The cooling power of the cooling system is determined by the difference between the temperature of the components to be cooled and the cooling fluid, as well as by the flow conditions of the cooling fluid, in particular of the flow velocity and quantity thereof. The temperature and/or flowing conditions of the cooling fluid are typically kept constant.

In laser processes in which energy use conditions may be timely variable, for example due to the alternation of activity times with pause times, thermal equilibrium in the laser system may be broken due to different thermal conditions. A varying energetic balance may cause the cooling system to have different cooling efficiencies and outcomes at different times, resulting in the uncontrolled absorption of heat by components of the laser system and hence in loss of laser precision.

Reactive protocols to adapt the cooling conditions after such losses of thermal equilibrium occur have limited effect, since there is always a thermal delay or shift between the action of the cooling system and actual thermal dissipation in the laser system.

Therefore, there is room for technical improvement in the field of cooling systems for laser processing devices and system.

A predictive cooling method for cooling a laser system based on a current applied to a laser light source is known from KR 101 418 054 B1.

SUMMARY OF THE INVENTION

The present invention aims at providing a solution to the previously mentioned disadvantages of the prior art by providing a cooling control unit, a laser system and a method allowing to implement a predictive cooling scheme for a laser processing device. A solution to this problem is provided by a cooling control unit according to claim 1, by a laser system according to claim 6 and by a method according to claim 12.

Preferred embodiments of the invention are defined in the dependent claims.

A first aspect of the invention refers to a cooling control unit for controlling a cooling system of a laser processing device. "Laser processing device" may refer herein to a device configured for laser-processing a workpiece, for example by a 3-D printing, laser-welding, laser-cutting, laser-graving, laser-marking or any other laser process. The laser processing device may for example be or comprise an additive manufacturing module, a welding module, or a 3-D printer. For this purpose, the laser processing device comprises a deflection unit for controllably deflecting a laser beam to a target point in space, in particular to a target point on a work field of the laser processing device. Such deflection unit may comprise one or more movable mirrors. For example, the deflection unit may comprise a first movable mirror rotatable around a first axis and a second movable mirror rotatable around a second axis perpendicular to the first axis, i.e. a so-called pair of XY movable mirrors. The deflection unit operates on electric energy. Electric energy is used for driving a movement of the movable mirrors, which electric energy need to be fed into the deflection unit for operation.

The laser processing device may further comprise a laser light generation device for generating a laser beam for laser-processing said workpiece. The laser light source also operates on electric energy, used for generating the laser beam. The laser light generation device may comprise a laser light source. However, the laser light generation device may additionally or alternatively comprise one or more components for providing a laser beam from laser light provided by an external source. For example, the laser light generation device may be or comprise a collimator. The cooling control unit according to the invention may be hardware-implemented and/or software-implemented. For example, the control unit may be a dedicated processing unit and/or a dedicated module within a processing unit, such as a CPU, a control card or the like. As a further example, the cooling control unit may be a piece of software implementable on such a processing unit or on a general-purpose computer.

The cooling control unit according to the invention comprises a measurement module and a regulation module. The measurement module is configured for detecting a parameter of an electric power input provided to the laser processing device and for determining whether the parameter is varying, in particular increasing or decreasing, possibly by a at least given predefined difference, for example by 5% or more, 10% or more or 20% or more. The parameter may be considered to be varying if such predefined difference is registered over a predefined time interval, for example over a time interval of 1 minute or 1 second. The "electric power input" refers herein to an input receivable by the laser deflection unit of the laser processing unit, , that correlates with an electric energy consumption of the laser processing unit.

In a first variant of the invention, the electric power input corresponds to an electric current fed into the deflection unit of the laser processing module for providing electric energy on which the deflection unit operates.

In a second variant of the invention, the electric power input corresponds to an electric signal encoding a control command corresponding to an instruction to the laser deflection unit of the laser processing device or to another device connected thereto related to an electric power input provided to the laser deflection unit of the laser processing device. For example, the electric power input may correspond to an electric signal encoding a control command controlling properties of an electric current being provided to the laser deflection unit of the laser processing device and/or controlling an operation of the laser deflection unit of the laser processing device.

A "parameter" may refer herein to a measurable or detectable property of such electric power input. If the electric power input corresponds to an electric current, the parameter may be a measurable electric parameter, such as for example an electric current intensity, an electric voltage and/or an electric power. If the electric power input corresponds to a control command provided or to be provided to the laser processing device, the parameter may correspond to an instruction encoded in the control command, for example to a "raise electric power" instruction or to a "reduce electric current intensity" instruction.

The regulation module is configured for generating a control signal for controlling the cooling system based on the parameter detected by the measurement module to vary a cooling power of the cooling system if the measurement module determines that the parameter is varying. In particular, the regulation module may be configured for generating the control signal for controlling the cooling system based on the parameter detected by the measurement module to:

- increase the cooling power of the cooling system if the measurement module determines that the parameter is increasing (in terms of absolute value); and/or
- decrease the cooling power of the cooling system if the measuring module determines that the parameter is decreasing (in terms of absolute value).

The control signal generated by the regulation module of the cooling control unit according to the invention may be provided to a cooling system configured for providing a cooling effect to the laser processing device, in particular to the deflection unit and/or the laser light generation unit thereof. The control signal may for example correspond to an "increase cooling power" instruction or to a "decrease cooling power" instruction.

Thus, the cooling control unit according to the first aspect of the invention is specifically programmed to generate a control signal that allows selectively controlling the cooling conditions of a laser processing device based on a parameter of the electric power input. This is based on the realisation by the present inventors that a parameter of an electric power input, for example, an electric current intensity or an electric current voltage provided to the laser deflection unit of the laser processing device as a feeding of electric energy or a related control command, can be used as a reliable prediction of the cooling power that will be subsequently needed in the laser processing device to maintain thermal equilibrium, before or while thermal conditions actually vary.

If, for example, the deflection unit of the laser processing device must be moved quickly and repeatedly during a given phase of a laser process, this may require a higher input of electric power into the laser processing device. As a consequence, a control command to increase the electric power being input into the laser processing device, in particular to the deflection unit, may be generated and provided to the laser processing device and/or to an electric power supply connected thereto. The cooling control unit of the invention may detect this variation in the electric power input and correspondingly increase the cooling power of the cooling system, for example by correspondingly increasing a speed or decreasing a temperature of a cooling fluid, upon detecting the intended increase in electric power input or the corresponding control command, thereby preventively countering thermal instability in the laser processing device before or while it sets in.

As a consequence, the cooling power provided by the cooling system can be adapted to thermal conditions that are about to occur in the laser processing device and better thermal stability can be achieved as compared to a constant cooling scheme and to a reactive/corrective cooling scheme. Thereby, better laser quality can be provided.

Notably, the cooling control unit of the invention allows achieving a better control of thermal conditions in the laser processing device without requiring an additional temperature control circuit.

According to preferred embodiments, the measurement module may be further configured for detecting a value of the parameter. If, for example, the electric power input corresponds to an electric current being provided to the laser processing device, and the parameter corresponds to an electric current intensity, the value of the parameter may correspond to a current intensity value, for example 1 mA, which can be detected by the measurement module. The regulation module may be further configured for generating the control signal to control the cooling system to set the cooling power to a target cooling power value based on the parameter value according to a first predefined model. The first predefined model may map parameter values to target cooling power values. For example, the first predefined model may map a value of the parameter of 1 mA to corresponding first flow conditions of a cooling fluid implementable by the cooling system. Thus, by reference to the previous example, the control signal may be generated as a control signal specifically associated to a current intensity value of 1 mA. According to this example, the first predefined model may forecast that when an electric current with an electric current intensity that turns to 1 mA is provided to the laser processing device, the cooling system needs to provide said first flow conditions of the cooling fluid in order to maximise thermal stability in the laser processing device.

The first predefined model may be based on a linear relationship between the parameter of the electric power input and a temperature and/or flowing speed of the cooling fluid used by the cooling system for cooling the laser processing device. Such linear relationship may comprise a proportionality factor that can be determined experimentally or by means of simulation.

In related preferred embodiments of the invention, the measurement module may further be configured for detecting a variation rate of the parameter. A variation rate may refer herein to a variation per unit of time. For example, the measurement module may detect a variation in an electric current intensity of 0.1 mA/s. The regulation module may further be configured for generating the control signal to control the cooling system to set a variation rate of the cooling power to a target cooling power variation rate based on the variation rate of the parameter according to a second predefined model. The second predefined model may map variation rate of the parameter to target cooling power variation rates. For example, the second predefined model may map a variation rate of the parameter of -0.2 mA/s to corresponding second flow conditions of a cooling fluid implementable by the cooling system. According to this example, the second predefined model forecast that when an electric current with an electric current intensity that is decreasing at a rate of 0.2 mA/s is provided to the laser processing device, the cooling system needs to provide said second flow conditions of the cooling fluid in order to maximise thermal stability in the laser processing device.

In preferred embodiments, the measurement module may be connected or connectable to an electric power supply device configured for providing an electric current to the laser deflection unit of the laser processing device. The electric power supply device may be an independent device, in particular a device different from the laser processing device. "Independent device" may refer herein to a structurally and/or functionally independent device. The measurement module may be configured for detecting an electric parameter of the electric current provided by the electric power supply device as said parameter. The electric parameter may preferably be an electric current intensity (measurable in Amperes or in subunits thereof) and/or an electric power (measurable in Watt or in subunits thereof). By detecting the parameter of the electric current provided by the electric power supply device, in particular by detecting variations thereof, the cooling control unit of the invention can correctly predict when it is necessary to adapt the cooling conditions provided by the cooling system in order to improve thermal stability of the laser processing device.

According to preferred embodiments, the measurement module may be connected or connectable to an internal control circuitry of the laser processing device configured for measuring an electric parameter of an electric current being input to the laser deflection unit of the laser processing device. The internal control circuitry may be a component of the laser processing device, in particular of the laser deflection unit. The internal control circuitry may be configured for measuring the electric parameter and the measurement module may be configured for obtaining the electric parameter from the internal control circuitry. The electric parameter may preferably be an electric current intensity and/or an electric power. The electric parameter corresponds to the parameter, the variation of which is detected by the measurement module. Thus, in laser processing devices including such internal control circuitry, the parameter used by the cooling control unit according to the present invention can be obtained from the internal control circuitry without employing any dedicated measurement equipment.

In some preferred embodiments, the measurement module may be connected or connectable to an electric sensor configured for measuring an electric parameter of an electric current being input to the laser deflection unit of the laser processing device a. The measurement module may be configured for detecting the electric parameter measured by the electric sensor. The electric sensor may be an independent device, in particular a device different from the laser processing device. "Independent device" may refer herein to a structurally and/or functionally independent device. The electric parameter may preferably be an electric current intensity and/or an electric power. The electric sensor may be an independent device, which may be or comprise a multimeter or the like. "Independent device" may refer herein to a structurally and/or functionally independent device. Thanks to the electric sensor, the cooling control unit according to the invention may be adapted to operate with a laser processing device, which may possibly not include an integrated internal control circuitry according to the previously described embodiment.

According to preferred embodiments, the measurement module may be connected or connectable to a control module configured for controlling the laser deflection unit of the laser processing device. The control module may be configured for generating control commands to the laser deflection unit. The control module may for example be a comprise a control card, such as an SP-ICE 3 control card of Raylase GmbH. The measurement module may be configured for reading a control command from the control module to the laser deflection unit, which may correspond to a target operation power of the laser deflection unit. The measurement module may be configured for detecting the target operation power as the parameter, the variation of which is detected by the measurement module. The measurement module may for example detect that the control module instructs the laser deflection unit to change the rotation speed of movable mirrors of the laser deflection unit from a first value to a second higher value and the regulation module may trigger, in reaction to such variation, a corresponding adaptation of the cooling power provided by the cooling system.

A second aspect of the invention refers to a laser system comprising a laser processing device, a cooling system, and a cooling control unit according to the first aspect of the invention, in particular according to any of the previously described embodiments.

The laser processing device may be configured for laser processing a workpiece and comprises a laser deflection unit for deflecting a laser beam. The deflection unit may be configured for controllably deflecting a laser beam to a target point in space, in particular to a target point on a work field of the laser processing device. Such deflection unit may comprise one or more movable mirrors. For example, the deflection unit may comprise a first movable mirror rotatable around a first axis and a second movable mirror rotatable around a second axis perpendicular to the first axis, i.e. a so-called pair of XY movable mirrors. The laser light generation device may be configured for generating a laser beam in a wavelength range from 300 nm to 11000 nm, preferably from 350 to 1100 nm. Within such wavelength ranges, the beneficial effects of the invention are particularly advantageous since, due to a small spot size, i.e. to a small laser beam spot or laser beam diameter on the work field and/or at the focal position of the laser beam, the laser processing is particularly sensitive to thermally induced variations.

The cooling system is configured for cooling the laser processing device, in particular the laser deflection unit and/or the laser light generation device. The cooling system may be configured for selectively controlling the flowing conditions and/or the temperature of a cooling fluid that is used for cooling the laser processing device, in particular the laser deflection unit and/or the laser light generation device. The flowing conditions may comprise a flowing velocity and/or a flux of the cooling fluid. The cooling control unit may be configured for controlling said flowing conditions and said temperature, by correspondingly controlling the cooling system. The cooling fluid may in particular be or comprise water or air.

In preferred embodiments, the cooling system may comprise a cooling fluid pump for controlling the flow conditions of a cooling fluid used for cooling the laser processing device, in particular the laser deflection unit and/or the laser light generation device thereof. Additionally or alternatively, the cooling system may comprise a temperature control circuit for controlling the temperature of the cooling fluid. The cooling control unit may be configured for controlling the fluid pump and/or the temperature control circuit to control the flow conditions and/or the temperature of the cooling fluid, respectively, based on the parameter of the electric power input.

A capacity of the cooling system to dissipate heat generated within the laser processing device, which may be determined by the flowing conditions of the cooling fluid, in particular by the flowing velocity and/or the temperature thereof, may be referred to as "cooling power". A higher cooling power, which may be achieved with higher flowing speed of the cooling fluid and/or with a lower temperature of the cooling fluid, may hence refer to a greater capacity to absorb heat, i.e. to cool down the laser processing device. A lower cooling power, which may be achieved with lower flowing speed of the cooling fluid and/or with a higher temperature of the cooling fluid, may hence refer to a lower capacity to absorb heat, i.e. to cool down the laser processing device.

As explained above for the embodiments of the first aspect of the invention, the cooling control unit is configured for controlling the cooling power of the cooling system based on a parameter of an electric power input received by the laser deflection unit of the laser processing device and detected by the cooling control unit. In particular, the cooling control unit may be configured for varying the cooling power of the cooling system when detecting a variation in the parameter of the electric power input, possibly by a at least given predefined difference, for example by 5% or more, 10% or more or 20% or more. More specifically, the cooling control unit may be configured for increasing the cooling power of the cooling system when detecting an increase in the parameter of the electric power input and for reducing the cooling power of the cooling system when detecting a decrease in the parameter of the electric power input.

According to preferred embodiments, the laser system may further comprise a power supply device configured for providing an electric current to the laser processing device, in particular to the laser deflection unit of the leaser processing device. The power supply device may for example be configured for providing the electric current to the laser processing device with a predetermined electric current intensity and/or with a predetermined electric power. The control cooling unit may be connected with the power supply device. The measurement module of the cooling control unit may be configured for reading from the electric power supply device an electric parameter, like an electric current intensity or an electric power, of an electric current provided by the electric power supply device to the laser deflection unit of the leaser processing device. The regulation module of the cooling control unit may be configured for controlling the cooling power of the cooling system based on said electric parameter, which corresponds to said parameter.

In preferred embodiments, the laser processing device may comprise internal control circuitry configured for measuring an electric parameter of an electric current being input to the laser deflection unit of the leaser processing device. The measurement module of the control cooling unit may be connected with the internal control circuitry of the laser processing device and the regulation module of the cooling control unit may be configured for controlling the cooling power of the cooling system based on said electric parameter, i.e. using the electric parameter as the previously mentioned parameter, based on which the cooling power is controlled.

According to preferred embodiments, the laser system may further comprise an electric sensor, for example a multimeter, configured for measuring an electric parameter of an electric current being input, for example by a power supply device, to the laser deflection unit of the leaser processing device. The electric parameter may for example by an electric current intensity or an electric power. The measurement module of the control cooling unit may be connected with the electric sensor and may be configured for reading the electric parameter measured by the electric sensor. The regulation module of the cooling control unit may be configured for controlling the cooling power of the cooling system based on the electric parameter measured by the electric sensor, i.e. using the electric parameter as the previously mentioned parameter, based on which the cooling power is controlled.

A third aspect of the invention refers to a method of controlling a laser system according to any of the previously described embodiments of the second aspect of the invention, in particular using a cooling control unit according to any of the embodiments of the first aspect of the invention. The method may be a computer-implemented method and may be implemented by the cooling control unit. The method comprises: detecting a parameter of an electric power input received by a laser deflection unit of a laser processing device of the laser system and determining whether the parameter is varying; and if the parameter is varying, controlling the cooling system of the laser system to vary a cooling power of the cooling system based on a variation of the parameter. In particular, the method may comprise detecting whether the parameter is increasing or decreasing and controlling the cooling system based thereon, to increase or decrease the cooling power of the cooling system if the parameter is varying, possibly by a at least given predefined difference, for example by 5% or more, 10% or more or 20% or more. Thereby, the method may preventively prevent and compensate thermal variations within the laser processing device.

Detecting the parameter received by the laser processing device may comprise detecting a value of the parameter and controlling the cooling system based on the parameter may comprise setting the cooling power of the cooling system to a target cooling power value based on the value of the parameter according to a first predefined model, which may correspond to the first predefined model referred to above.

Detecting the parameter received by the laser processing device may, additionally or alternatively, comprise detecting a variation rate of the parameter and controlling the cooling system based on the parameter may comprise setting a variation rate of the cooling power to a target cooling power variation rate based on the variation rate of the parameter according to a second predefined model, which may correspond to the second predefined model referred to above.

The electric power input corresponds to an electric current or a control command provided or to be provided to the laser deflection unit of the laser processing device. The electric current may preferably comprise one or more of an electric current generated by a power supply device connected to the laser processing device, an electric current measured by the laser processing device, in particular by internal control circuitry, corresponding to electric current being input to the laser processing device, and an electric current measured by an electric sensor connected between a power supply device and the laser processing device. The parameter may be an electric current intensity and/or an electric power.

The previously mentioned control command may be provided to the laser deflection unit for example by a control module like the previously described control module. The parameter may preferably correspond to a target operation of the laser deflection unit of the laser processing device.

"Target operation" may refer herein to any action implementable by the the laser processing device, in particular the laser deflection unit ice thereof, in the course of a laser process, which may be associated with a variation in an electric current required by the laser deflection unit. For example, a target operation "begin rotating mirror", or "increase rotation speed of mirror" aimed at the laser deflection unit may be associated with an increase in the electric current intensity required by the laser deflection unit. In the method of the invention, the cooling power of the control system may be adapted in reaction to such example operation.

BRIEF DESCRIPTION OF THE DRAWINGS

Fig. 1    shows a schematic view of a laser processing device including a cooling control unit according to the first aspect of the invention.

Fig. 2    shows a schematic diagram of the functional blocks of an embodiment of a laser system according to the second aspect of the invention including a cooling control unit according to the first aspect of the invention.

Fig. 3    shows a schematic diagram of the functional blocks of an embodiment of a laser system according to the second aspect of the invention including a cooling control unit according to the first aspect of the invention.

Fig. 4     shows a schematic diagram of the functional blocks of an embodiment of a laser system according to the second aspect of the invention including a cooling control unit according to the first aspect of the invention.

Fig. 5     shows a schematic diagram of the functional blocks of an embodiment of a laser system according to the second aspect of the invention including a cooling control unit according to the first aspect of the invention.

Fig. 6     is a flow diagram of a method according to the third aspect of the invention implemented by the cooling control unit of Figs. 2, 3 and 4.

Fig. 7     is a flow diagram of a method according to the third aspect of the invention implemented by the cooling control unit of Fig. 5.

DESCRIPTION OF PREFERRED EMBODIMENTS OF THE INVENTION

For the purposes of promoting an understanding of the principles of the invention, reference will now be made to specific preferred embodiments illustrated in the drawings, and specific language will be used to describe the same. It will nevertheless be understood that no limitation of the scope of the invention is thereby intended, such alterations and further modifications in the illustrated apparatus and such further applications of the principles of the invention as illustrated therein being contemplated as would normally occur now or in the future to someone skilled in the art to which the invention relates within the scope defined by the claims.

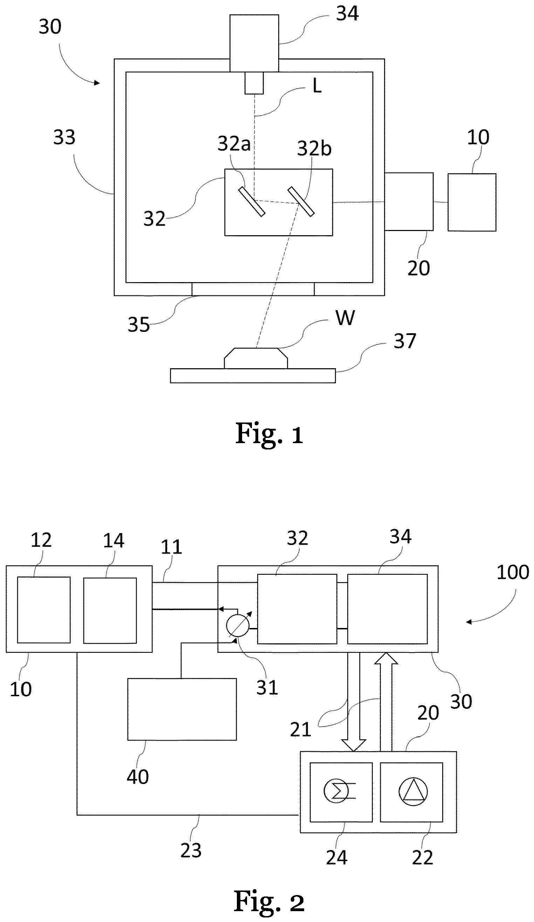

Fig. 1 shows a schematic view of a laser processing device 30, for example an additive manufacturing device, including a laser light generation device 34, provided in the form of a laser source device, and a laser deflection unit 32 comprising a pair of XY movable mirrors 32a and 32b. A laser beam L generated by the laser light generation device 34 is controllably deflected by the movable mirrors 32a, 32b of the laser deflection unit 32 towards a work field 37 for laser processing a workpiece W through a laser transparent window 35 formed in a housing 33. The housing 33, which can be dust-tight and air-tight, encloses the laser deflection unit 32 and the laser light generation device 34 at least in part. The laser processing device 30 can include other optical and/or electronic components (not-shown in Fig. 1), such as a focusing device for focusing the laser beam L on the work field 37, which can be arranged along the path of the laser beam L between the laser light source 34 and the laser deflection unit 32.

The laser processing device 30 is connected with a cooling system 20 that is configured for cooling the laser processing device 30, in particular the laser deflection unit 32 and the laser light generation device 34. A cooling effect provided by the cooling system 20 can be transmitted over a cooling circuit with a cooling fluid such as water or air, which is circulated through the laser processing device in order to absorb and extract from the laser processing device 20 heat, for example heat produced by the laser deflection unit 32 and/or the laser light generation device 34. The cooling effect provided by the cooling system helps maintaining thermal stability in the laser processing device 30. If thermal stability is lost due to the heat generated by the laser deflection unit 32 and/or the laser light generation device 34, it may cause malfunctioning of the laser processing device 30 and a corresponding loss of laser precision for laser-processing the workpiece W. This can be prevented or attenuated by the cooling system 20.

The laser processing device 30 is also connected to a cooling control unit 10 that is configured for controlling the action of the cooling system 20 upon the laser light generation device 34 and the laser deflection unit 32 so as to preventively provide thermal stability within the laser processing device 30.

Figs. 2 to 5 schematically illustrate the functional blocks of different embodiments of a laser system 100 including the laser processing device 30 and the cooling control unit 10 shown in Fig. 1. In Figs. 2 to 5, the internal details of the laser processing device 30 are not shown in detail. Instead, only the laser deflection unit 32 and the laser light generation device 34 are schematically shown as internal components of the laser processing device 30.

In each of Figs. 2 to 4, the laser processing device 30 is provided by an electric power supply device 40 with an electric power input in the form of an input electric current. The electric power supply device 40 can for example comprise a source of electric current with desired values of electric current intensity, power and/or voltage. In each of the embodiments shown in Figs. 2 to 5, the electric current provided by the electric power supply device 40 is understood to be provided to the laser deflection unit 32.

By way of example, the electric current may be provided to the laser deflection unit 32 as a control signal with a given electric current intensity for controlling a movement of the movable mirrors 32a, 32b thereof.

Also shown in each of Figs. 2 to 5, is the cooling system 20, which is configured for establishing a controlled circulation of a cooling fluid to and from the laser processing device 30. The circulation of the cooling fluid provided by the cooling system 20 is understood herein to be provided to the laser processing device 30 including to each of the laser deflection unit 32 and the laser light generation device 34. However, in other related embodiments, the circulation of the cooling fluid may be provided to one of the laser light generation device 34 and the laser deflection unit 32. The cooling system 20 comprises a pump 22 configured to control the flowing conditions of the cooling fluid, including a flow velocity, and a heat exchanger 24 configured for controlling a temperature of the cooling fluid. The flow of the cooling fluid between the cooling system 20 and the laser processing device 30 is represented in Figs. 1 to 5 by arrows 21 extending from the cooling system 20 to the laser processing device 30 and vice versa.

The cooling control unit 10, which may be a software running on a computer or on a dedicated processing unit, is connected to the cooling system 20 and to the laser processing device 30. The cooling control unit 10 comprises a measurement module 12 and a regulation module 14.

In some embodiments, as shown in Fig, 2, the cooling control unit 10, which can be integrated in a larger control unit, is configured for controlling the laser deflection unit 32 and/or the laser light generation device 34 over a control connection 11.

In the embodiment shown in Fig. 2, the laser processing device 30 is a digital laser processing device that comprises an internal control circuitry 31 that is configured for measuring an electric current intensity of an electric current provided by the electric power supply device 40 to the laser deflection unit 32 and to provide the measured value of the electric current intensity to the cooling control unit 10, in particular to the measurement module 12. Although schematically represented herein, in general, as an internal component of the laser processing device 30, the internal control circuitry 31 can be, in some embodiments, an internal component of the laser deflection unit 32. By reading the electric current intensity measured by the internal control circuitry 31, the measurement module 12 can monitor in real-time the electric current intensity of the electric current provided by the electric power supply device 40 that enters the laser processing device 30 as an electric energy input to the laser deflection unit 32.

If the measurement module 12 determines that the value of the electric current intensity measured by the internal control circuitry 31 is varying, for example by 10% or more, the regulation module 14 sends to the pump 22 and/or the heat exchanger 24 a cooling control signal transmitted through a connection 23, which causes the cooling system 22 to correspondingly vary a cooling power provided to the laser processing device 30, in order to preventively adapt the cooling conditions provided to the laser processing device 30 so as to maintain thermal stability therein.

For example, if the measurement module 12 detects that the internal control circuitry 31 is measuring an increasing electric current intensity, the regulation module 14 can generate a cooling control signal that controls the cooling system 20 to increase the cooling power provided to the laser processing device 30. If the measurement module 12 detects that the internal control circuitry 31 is measuring a decreasing value of electric current intensity, the regulation module 14 can generate the cooling control signal to control the cooling system 22 decrees the cooling power provided to the laser processing device 30.

The cooling power provided by the cooling system 20 can be increased by decreasing the temperature to which the heat exchanger 24 cools down the cooling fluid coming from the laser processing device 30 before returning it to the laser processing device 30 and/or by increasing the velocity of flow of the cooling fluid by correspondingly increasing the pumping power of the pump 22. Likewise, the cooling power provided by the cooling system 20 can be decreased by increasing the temperature to which the heat exchanger 24 cools down the cooling fluid and/or by decreasing the pump power provided by the pump 22 to the cooling fluid.

By controlling the cooling power provided by the cooling system 22 to the laser processing device 30 based on a measurement of an electric power input provided to the laser processing device 30, the cooling control unit 10 implements a predictive cooling scheme that allows countering uncontrolled variations of thermal conditions of the laser processing device 30 before they are caused by variations in the electric power input provided to the laser processing device, in this case by variations in the electric current intensity of the electric current provided by the electric power supply device 40. Thus, variations in the electric power input provided of the laser processing device 30 are used by the cooling control unit 10 as an indicator of upcoming thermal fluctuations in the laser processing device 30 to be compensated by the cooling system 20.

The regulation module 14 can operate based on a first predefined model that maps values of the electric current intensity I delivered by the electric power supply device 40 to respective target cooling power values, which may for example correspond to pairs of values of the pump power P provided by the pump 22 and the temperature T to which the heat exchanger 24 cools down the cooling fluid. For example, the first predefined model may be represented by functions:

$$P = a*I+b; \qquad T = c*I+d;$$

wherein a and c are empirically predetermined proportionality factors and b and d are empirically predetermined calibration constants. Thus, the functions P and T define a target cooling power as a function of I.

Additionally or alternatively, the measurement module 12 can be configured for generating the control signal to control the cooling power provided by the cooling system 20 to the laser processing device 30 based on a second predefined model represented by the functions:

$$P' = a'*I' +b'; \quad T' = c'*I'+d';$$

wherein P', I' and T' respectively represent time derivatives (i.e. variation rates) of P, I and T, wherein a' and c' are empirically predetermined proportionality factors and b' and d' are empirically predetermined calibration constants. The functions P' and T' define a target cooling power variation rate as a function of a variation rate of I.

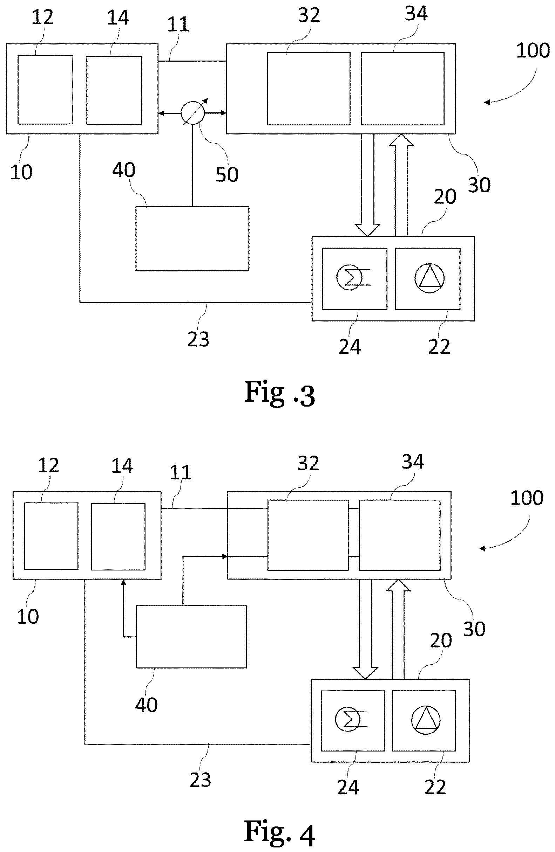

The embodiment illustrated in Fig. 3 differs from the embodiment illustrated in Fig. 2 in that the electric current intensity of the electric current provided by the electric power supply device 40 to the laser processing device 30 is measured by an external electric sensor 50 rather than by the internal control circuitry 31 of the embodiment shown in Fig. 2. The electric sensor 50 can comprise a multimeter and provides a measurement of the electric current intensity that is read and monitored by the measurement module 12 of the cooling control unit 10, which otherwise operates explained above for the exemplary embodiment of Fig. 2.

The embodiment illustrated in Fig. 4 differs from the exemplary embodiments illustrated in each of Figs. 2 and 3 in that, rather than obtaining a measurement of the electric current intensity of the electric current provided by the electric power supply device 40 (cf. internal control circuitry 31 in Fig. 2 and electric sensor 50 in Fig. 3), the cooling control unit 10, in particular the measurement module 12, is in direct communication with the electric power supply device 40 to read the value of the electric current intensity being provided by the electric power supply device 40, for example by accessing control settings and/or internal circuitry of the electric power supply device 40. Other than that, the cooling control unit 10 of the exemplary embodiment shown in Fig. 4 operates as described above for the exemplary embodiment shown in Fig. 2.

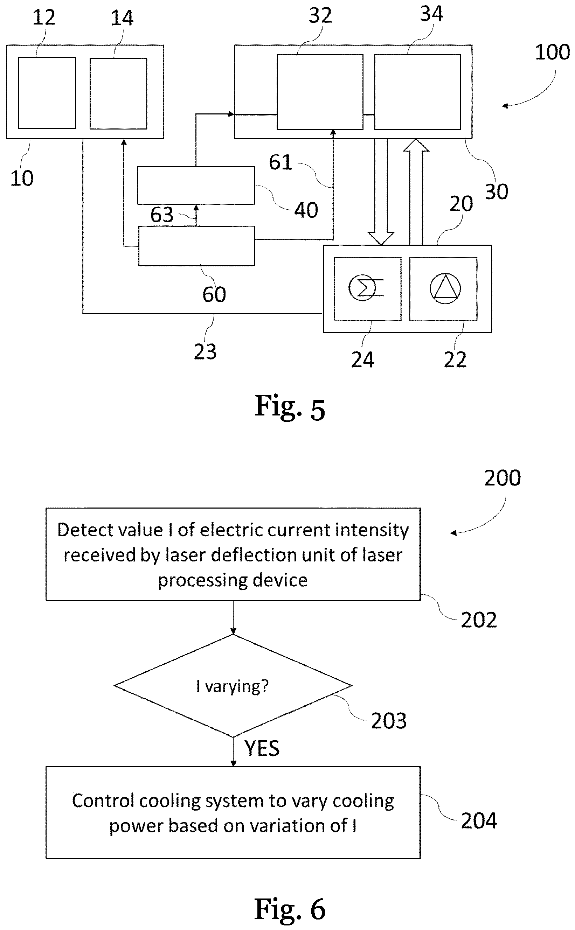

In the exemplary embodiment schematically illustrated in Fig. 5, the difference with respect to the exemplary embodiment illustrated in Fig. 4 is that, rather than being in direct communication with the electric power supply device 40, the cooling control unit 10, in particular the measurement module 12, is in communication with a control module 60. The control module 60, which can be hardware-implemented or software-implemented, possibly under the same platform or processor as the cooling control unit 10, is in communication with the laser processing device 30, over a first control connection 61, and with the electric power supply device 40, over a second control connection 63.

The control module 60 controls the operation of the laser deflection unit 32 and the laser light generation device 34 as well as the properties of the electric current provided by the electric power supply device 40 to the laser processing device 30. The control module 60 sends control commands to the laser deflection unit 32 and the laser light generation device 34 to laser process the workpiece W shown in Fig. 1. Further, the control module 60 controls the electric power supply device 40 to provide to the laser processing device 30 the electric current required for laser-processing the workpiece W, for example according to a predefined or programmed laser processing scheme.

The measurement module 12 of the cooling control unit 10 is configured to read the control commands issued by the control module 60 that are related to a corresponding target operation power of the laser deflection unit 32. When a variation in any of these target operation powers is detected by the measurement module 12, the regulation module 14 implements the predictive cooling scheme explained above for Fig. 1.

Additionally or alternatively, the adjustment of the cooling power provided by the cooling system 20 can be triggered based on a control command issued by the control module 62 to the electric power supply device 40. For example, when the control module 60 instructs the electric power supply device 40 to increase the electric current intensity of an electric current provided to the laser processing device 30, either directly or in relation with a corresponding setting of a target operation power of the laser deflection unit 32 (e.g. increase rotation speed of mirror 32a and/or 32b), this command can be detected by the measurement module 12, which triggers the regulation module 14 to correspondingly increase the cooling power provided by the cooling system 22 the laser processing device 30, such that thermal stability is preserved at the laser deflection unit 32 and/or at the laser light generation device 34.

Fig. 6 shows a schematic flow diagram of a method 200 of controlling the laser system 100 shown in Fig. 2, 3 or 4, which is implemented by the cooling control unit 10. At 202, a value of the electric current intensity I of an electric current provided to the laser deflection unit 32, is detected, in particular by the measurement module 12.

At 203, the condition is checked whether the electric current intensity I is varying. This may comprise detecting whether I is varying by a predefined variation, for example by 20% or more. If this is the case, the method 200 proceeds to 204.

At 204, the cooling system 20 is controlled to adapt the cooling power provided to the laser processing device 30, for example by correspondingly adapting a pumping power of the pump 22 and/or a temperature of operation of the heat exchanger 24, in order to compensate for thermal variations that are expected in the laser processing device 30 in view of the variation of I. Step 204 can be implemented by the regulation module 14 of the cooling control unit 10.

In other related embodiments of a method like method 200, a parameter different from the electric current intensity I may be used for monitoring the electric current provided to the laser processing device, for example an electric voltage (measurable in volts or in subunits thereof) or an electric power (measurable in watts or in subunits thereof).

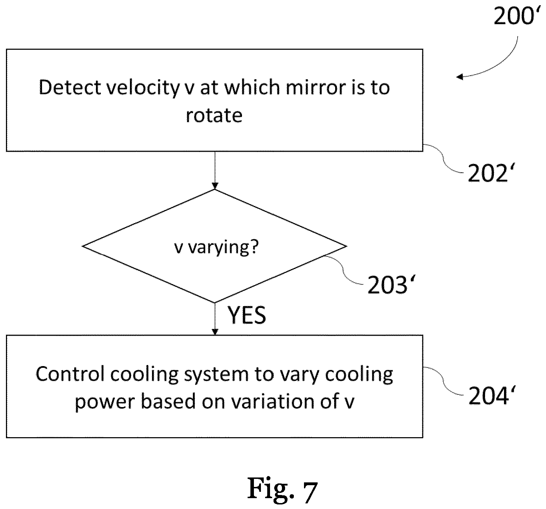

Fig. 7 shows a flow diagram of a method 200' implemented by the cooling control unit 10 of the exemplary embodiment of Fig. 5. At 202', a velocity v at which one or both of the mirrors 32a, 32b of the laser deflection unit 32 should operate according to a control command issued by the control module 60 is detected by the detection module 12 of the cooling control unit 10.

At 203', the measurement module 12 determines whether v is varying. If v is varying, possibly by a predefined difference, for example by at least 20%, the method 200' continues to 204'.

At 204', the regulation module 14 of the cooling control unit 10 controls the cooling system 20 such that the cooling power provided to the laser processing device 30, in particular to the laser deflection unit 32, varies according to the variation detected for v.

For example, if the control command issued by the control module 60 is instructing the mirror 32a and/or 32b of the laser deflection unit 32 to move quicker, which correlates with an increase in the electric power input (e.g. the electric current intensity) to be received by the laser deflection unit 32, the regulation module 14 of the cooling control unit 10 instructs the cooling system 20 to increase the cooling power, for example by reducing the temperature at which the heat exchanger 24 cools down the cooling fluid coming back from the laser processing device 30 and/or by increasing the pump power provided by the pump 22 to the cooling fluid.

**Claims**

1. A cooling control unit (10) for controlling a cooling system (20) of a laser processing device (30), wherein the cooling control unit (10) comprises:

   a measurement module (12) configured for detecting a parameter of an electric power input provided to a laser deflection unit (32) of the laser processing device (30) and for determining whether the parameter is varying, wherein the electric power input corresponds to an electric current or a control command provided to the laser deflection unit (32); and
   a regulation module (14) configured for generating a cooling control signal for controlling the cooling system (20) based on the parameter to vary a cooling power of the cooling system (20) if the measurement module (12) determines that the parameter is varying.

2. The cooling control unit (10) of claim 1, wherein the measurement module (12) is further configured for detecting a value of the parameter; and
   wherein the regulation module (14) is further configured for generating the control signal to control the cooling system (20) to set the cooling power to a target cooling power value based on the parameter value according to a first predefined model, wherein the first predefined model maps values of the parameter to target cooling power values.

3. The cooling control unit (10) of claim 1 or 2, wherein the measurement module (12) is further configured for detecting a variation rate of the parameter; and
   wherein the regulation module (14) is further configured for generating the control signal to control the cooling system (20) to set a variation rate of the cooling power to a target cooling power variation rate based on the variation rate of the parameter according to a second predefined model, wherein the second predefined model maps variation rates of the parameter to target cooling power variation rates.

4. The cooling control unit (10) of any of the preceding claims, wherein the measurement module (12) is configured for detecting an electric current intensity and/or an electric power of said electric current, as said parameter.

5. The cooling control unit (10) of any of claims 1 to 3, wherein the measurement module (12) is configured for reading said control command, the control command corresponding to a target operation power of the laser deflection unit (32).

6. A laser system (100) comprising:

   a laser processing device (30) for laser processing a workpiece (W), the laser processing device (30) comprising a laser deflection unit (32) for deflecting a laser beam (L);
   a cooling system (20) configured for cooling the laser processing device (30), in particular said laser deflection unit (32);
   and
   a cooling control unit (10) according to any of the preceding claims connected to the cooling system (20) and configured for controlling a cooling power of the cooling system (20) based on a parameter of an electric power input received by the laser deflection unit (32) of the laser processing device (30) and detected by the cooling control unit (10).

7. The laser system (100) of claim 6, wherein the laser processing device (30) further comprises a laser light generation device (34) for generating a laser beam.

8. The laser system (100) of claim 6 or 7, further comprising an electric power supply device (40) configured for providing an electric current to the laser deflection unit (32), wherein the cooling control unit (10) is connected with the electric power supply device (40), wherein the measurement module (12) of the cooling control unit (10) is configured for reading from the electric power supply device (40) an electric parameter of an electric current provided by the electric power supply device (40) to the laser deflection unit (32), and wherein the regulation module (14) of the cooling control unit (10) is configured for controlling the cooling power of the cooling system (20) based on said electric parameter.

9. The laser system (100) of any of claims 6 to 8, wherein the laser processing device (30) comprises internal control circuitry (31) configured for measuring an electric parameter of an electric current being input to the laser deflection unit (32), wherein the measurement module (12) of the cooling control unit (10) is connected with the internal control circuitry (31) and configured for reading the electric parameter measured by the internal control circuitry (12), wherein the regulation module (14) of the cooling control unit (10) is configured for controlling the cooling power of the cooling system (20) based on said electric parameter.

10. The laser system (100) of any of claims 6 to 9, further comprising an electric sensor (50) configured for measuring an electric parameter of an electric current being input to the laser deflection unit (32),

   wherein the measurement module (12) of the cooling control unit (10) is connected with the electric sensor (50) and configured for reading the electric parameter measured by the electric sensor (50), wherein the regulation module (14) of the cooling control unit (10) is configured for controlling the cooling power of the cooling system (20) based on the electric parameter measured by the electric sensor (50).

11. The laser system (100) of any of claims 6 to 10, wherein the cooling system (20) comprises a cooling fluid pump (22) for controlling the flow conditions of a cooling fluid used for cooling the laser processing device (30), in particular a laser deflection unit (32) and/or a laser light generation device (34) thereof, and a temperature control circuit (24) for controlling the temperature of the cooling fluid, wherein the cooling control unit (10) is configured for controlling the cooling fluid pump (22) and the temperature control circuit (24), to control the flow conditions and the temperature of the cooling fluid, respectively, based on the parameter of the electric power input.

12. A method of controlling a laser system (100) according to any of claims 6 to 11, wherein the method comprises:

   detecting a parameter of an electric power input received by a laser deflection unit (32) of the laser processing device (30) of the laser system (100) and determining whether the parameter is varying, wherein the electric power input corresponds to an electric current or to a control command provided to the laser deflection unit (32); and if the parameter is varying, controlling the cooling system (20) of the laser system (100) to vary a cooling power of the cooling system (20) based on a variation of the parameter.

13. The method of claim 12, wherein the electric power input corresponds to said electric

   current provided to the laser deflection unit (32), wherein the electric current preferably comprises one or more of:

      - an electric current generated by a power supply device connected to the laser processing device (30);
      - an electric current being input into the laser processing device (30); and
      - an electric current measured by an electric sensor (50) connected between a power supply device and the laser processing device (30);

   wherein the parameter preferably is an electric current intensity, an electric current voltage and/or an electric power.

14. The method of claim 12, wherein the electric power input corresponds to said control command provided to the laser deflection unit (32), wherein the parameter preferably corresponds to a target operation of the laser deflection unit (32) of the laser processing device (30), encoded in the control command.

15. The method of any of claims 12 to 14, wherein controlling the cooling system (20) of the laser system (100) to vary a cooling power of the cooling system (20) based on the variation of the parameter comprises controlling flowing conditions of a cooling fluid for cooling the laser processing device (30), in particular a laser deflection unit (32) and/or a laser light generation device (34) thereof, wherein the flowing conditions preferably comprise a temperature and/or a flowing velocity of the cooling fluid.

**Patentansprüche**

1. Kühlsteuereinheit (10) zum Steuern eines Kühlsystems (20) einer Laserbearbeitungsvorrichtung (30), wobei die Kühlsteuereinheit (10) Folgendes umfasst:

   ein Messmodul (12), das dazu eingerichtet ist, einen Parameter einer elektrischen Leistungseingabe zu erfassen, die einer Laserablenkeinheit (32) der Laserbearbeitungsvorrichtung (30) bereitgestellt wird, und zu bestimmen, ob der Parameter variiert, wobei die elektrische Leistungseingabe einem elektrischen Strom oder einem Steuerbefehl entspricht, der der Laserablenkeinheit (32) bereitgestellt wird; und
ein Regelmodul (14), das dazu konfiguriert ist, ein Kühlsteuersignal zum Steuern des Kühlsystems (20) basierend auf dem Parameter zu erzeugen, um eine Kühlleistung des Kühlsystems (20) zu variieren, wenn das Messmodul (12) bestimmt, dass der Parameter variiert.

2. Kühlsteuereinheit (10) nach Anspruch 1, wobei das Messmodul (12) ferner dazu konfiguriert ist, einen Wert des Parameters zu erfassen; und
wobei das Regelmodul (14) ferner dazu konfiguriert ist, das Steuersignal zu erzeugen, um das Kühlsystem (20) zu steuern, um die Kühlleistung basierend auf dem Parameterwert gemäß einem ersten vordefinierten Modell auf einen Zielkühlleistungswert einzustellen, wobei das erste vordefinierte Modell Werte des Parameters auf Zielkühlleistungswerte abbildet.

3. Kühlsteuereinheit (10) nach Anspruch 1 oder 2, wobei das Messmodul (12) ferner dazu konfiguriert ist, eine Variationsrate des Parameters zu erfassen; und
wobei das Regelmodul (14) ferner dazu konfiguriert ist, das Steuersignal zu erzeugen, um das Kühlsystem (20) zu steuern, um eine Variationsrate der Kühlleistung basierend auf der Variationsrate des Parameters gemäß einem zweiten vordefinierten Modell auf eine Zielkühlleistungsvariationsrate einzustellen, wobei das zweite vordefinierte Modell Variationsraten des Parameters auf Zielkühlleistungsvariationsraten abbildet.

4. Kühlsteuereinheit (10) nach einem der vorhergehenden Ansprüche, wobei das Messmodul (12) dazu konfiguriert ist, eine elektrische Stromintensität und/oder eine elektrische Leistung des elektrischen Stroms als den Parameter zu erfassen.

5. Kühlsteuereinheit (10) nach einem der vorhergehenden Ansprüche 1 bis 3, wobei das Messmodul (12) dazu konfiguriert ist, den Steuerbefehl zu lesen, wobei der Steuerbefehl einer Zielbetriebsleistung der Laserablenkeinheit (32) entspricht.

6. Lasersystem (100), das Folgendes umfasst:

   eine Laserbearbeitungsvorrichtung (30) zum Laserbearbeiten eines Werkstücks (W), wobei die Laserbearbeitungsvorrichtung (30) eine Laserablenkeinheit (32) zum Ablenken eines Laserstrahls (L) umfasst;
   ein Kühlsystem (20), das dazu konfiguriert ist, die Laserbearbeitungsvorrichtung (30), insbesondere die Laserablenkeinheit (32), zu kühlen; und
   eine Kühlsteuereinheit (10) nach einem der vorhergehenden Ansprüche, die mit dem Kühlsystem (20) verbunden ist und dazu konfiguriert ist, eine Kühlleistung des Kühlsystems (20) basierend auf einem Parameter einer elektrischen Leistungseingabe, die durch die Laserablenkeinheit (32) der Laserbearbeitungsvorrichtung (30) empfangen wird und durch die Kühlsteuereinheit (10) erfasst wird, zu steuern.

7. Lasersystem (100) nach Anspruch 6, wobei die Laserbearbeitungsvorrichtung (30) ferner eine Laserlichterzeugungsvorrichtung (34) zum Erzeugen eines Laserstrahls umfasst.

8. Lasersystem (100) nach Anspruch 6 oder 7, das ferner eine elektrische Leistungsversorgungsvorrichtung (40) umfasst, die dazu konfiguriert ist, der Laserablenkeinheit (32) einen elektrischen Strom bereitzustellen,
wobei die Kühlsteuereinheit (10) mit der elektrischen Leistungsversorgungsvorrichtung (40) verbunden ist, wobei das Messmodul (12) der Kühlsteuereinheit (10) dazu konfiguriert ist, aus der elektrischen Leistungsversorgungsvorrichtung (40) einen elektrischen Parameter eines elektrischen Stroms zu lesen, der durch die elektrische Leistungsversorgungsvorrichtung (40) der Laserablenkeinheit (32) bereitgestellt wird, und wobei das Regelmodul (14) der Kühlsteuereinheit (10) dazu konfiguriert ist, die Kühlleistung des Kühlsystems (20) basierend auf dem elektrischen Parameter zu steuern.

9. Lasersystem (100) nach einem der Ansprüche 6 bis 8, wobei die Laserbearbeitungsvorrichtung (30) eine interne Steuerschaltung (31) umfasst, die dazu konfiguriert ist, einen elektrischen Parameter eines elektrischen Stroms zu messen, der in die Laserablenkeinheit (32) eingegeben wird,
wobei das Messmodul (12) der Kühlsteuereinheit (10) mit der internen Steuerschaltung (31) verbunden ist und dazu konfiguriert ist, den elektrischen Parameter zu lesen, der durch die interne Steuerschaltung (12) gemessen wird, wobei das Regelmodul (14) der Kühlsteuereinheit (10) dazu konfiguriert ist, die Kühlleistung des Kühlsystems (20) basierend auf dem elektrischen Parameter zu steuern.

10. Lasersystem (100) nach einem der Ansprüche 6 bis 9, das ferner einen elektrischen Sensor (50) umfasst, der dazu konfiguriert ist, einen elektrischen Parameter eines elektrischen Stroms zu messen, der in die Laserablenkeinheit (32) eingegeben wird,
wobei das Messmodul (12) der Kühlsteuereinheit (10) mit dem elektrischen Sensor (50) verbunden ist und dazu konfiguriert ist, den elektrischen Parameter zu lesen, der durch den elektrischen Sensor (50) gemessen wird,
wobei das Regelmodul (14) der Kühlsteuereinheit (10) dazu konfiguriert ist, die Kühlleistung des Kühlsystems (20) basierend auf dem elektrischen Parameter zu steuern, der durch den elektrischen Sensor (50) gemessen wird.

11. Lasersystem (100) nach einem der Ansprüche 6 bis 10, wobei das Kühlsystem (20) eine Kühlfluidpumpe (22) zum Steuern der Strömungsbedingungen eines Kühlfluids, das zum Kühlen der Laserbearbeitungsvorrichtung (30) verwendet wird, insbesondere einer Laserablenkeinheit (32) und/oder einer Laserlichterzeugungsvorrichtung (34) davon, und eine Temperatursteuerschaltung (24) zum Steuern der Temperatur des Kühlfluids umfasst,

wobei die Kühlsteuereinheit (10) dazu konfiguriert ist, die Kühlfluidpumpe (22) und die Temperatursteuerschaltung (24) zu steuern, um die Strömungsbedingungen bzw. die Temperatur des Kühlfluids basierend auf dem Parameter der elektrischen Leistungseingabe zu steuern.

12. Verfahren zum Steuern eines Lasersystems (100) nach einem der Ansprüche 6 bis 11, wobei das Verfahren Folgendes umfasst:

Erfassen eines Parameters einer elektrischen Leistungseingabe, die durch eine Laserablenkeinheit (32) der Laserbearbeitungsvorrichtung (30) des Lasersystems (100) empfangen wird, und Bestimmen, ob der Parameter variiert, wobei die elektrische Leistungseingabe einem elektrischen Strom oder einem Steuerbefehl entspricht, der der Laserablenkeinheit (32) bereitgestellt wird; und

wenn der Parameter variiert, Steuern des Kühlsystems (20) des Lasersystems (100), um eine Kühlleistung des Kühlsystems (20) basierend auf einer Variation des Parameters zu variieren.

13. Verfahren nach Anspruch 12, wobei die elektrische Leistungseingabe dem elektrischen Strom entspricht, der der Laserablenkeinheit (32) bereitgestellt wird, wobei der elektrische Strom vorzugsweise eines oder mehrere der Folgenden umfasst:

- einen elektrischen Strom, der durch eine Leistungsversorgungsvorrichtung erzeugt wird, die mit der Laserbearbeitungsvorrichtung (30) verbunden ist;
- einen elektrischen Strom, der in die Laserbearbeitungsvorrichtung (30) eingegeben wird; und
einen elektrischen Strom, der durch einen elektrischen Sensor (50) gemessen wird, der zwischen einer Leistungsversorgungsvorrichtung und der Laserbearbeitungsvorrichtung (30) verbunden ist;

wobei der Parameter vorzugsweise eine elektrische Stromintensität, eine elektrische Stromspannung und/oder eine elektrische Leistung ist.

14. Verfahren nach Anspruch 12, wobei die elektrische Leistungseingabe dem Steuerbefehl entspricht, der der Laserablenkeinheit (32) bereitgestellt wird, wobei der Parameter vorzugsweise einem Zielbetrieb der Laserablenkeinheit (32) der Laserbearbeitungsvorrichtung (30) entspricht, der in dem Steuerbefehl codiert ist.

15. Verfahren nach einem der Ansprüche 12 bis 14, wobei das Steuern des Kühlsystems (20) des Lasersystems (100), um eine Kühlleistung des Kühlsystems (20) basierend auf der Variation des Parameters zu variieren, das Steuern von Strömungsbedingungen eines Kühlfluids zum Kühlen der Laserbearbeitungsvorrichtung (30), insbesondere einer Laserablenkeinheit (32) und/oder einer Laserlichterzeugungsvorrichtung (34) davon, umfasst, wobei die Strömungsbedingungen vorzugsweise eine Temperatur und/oder eine Strömungsgeschwindigkeit des Kühlfluids umfassen.

### Revendications

1. Unité de commande de refroidissement (10) pour commander un système de refroidissement (20) d'un dispositif de traitement laser (30), dans laquelle l'unité de commande de refroidissement (10) comprend :

un module de mesure (12) configuré pour détecter un paramètre d'une entrée de puissance électrique fournie à une unité de déviation laser (32) du dispositif de traitement laser (30) et pour déterminer si le paramètre varie, dans laquelle l'entrée de puissance électrique correspond à un courant électrique ou à une instruction de commande fournie à l'unité de déviation laser (32) ; et

un module de régulation (14) configuré pour générer un signal de commande de refroidissement pour commander le système de refroidissement (20) sur la base du paramètre pour faire varier une puissance de refroidissement du système de refroidissement (20) si le module de mesure (12) détermine que le paramètre varie.

2. Unité de commande de refroidissement (10) selon la revendication 1, dans laquelle le module de mesure (12) est en outre configuré pour détecter une valeur du paramètre ; et

dans laquelle le module de régulation (14) est en outre configuré pour générer le signal de commande pour commander le système de refroidissement (20) pour régler la puissance de refroidissement à une valeur de puissance de refroidissement cible sur la base de la valeur de paramètre selon un premier modèle prédéfini, dans laquelle le premier modèle prédéfini met en correspondance des valeurs du paramètre avec des valeurs de puissance de refroidissement cible.

3. Unité de commande de refroidissement (10) selon la revendication 1 ou 2, dans laquelle le module de mesure (12) est en outre configuré pour détecter un taux de variation du paramètre ; et
dans laquelle le module de régulation (14) est en outre configuré pour générer le signal de commande pour commander le système de refroidissement (20) pour régler un taux de variation de la puissance de refroidissement à un taux de variation de puissance de refroidissement cible sur la base du taux de variation du paramètre selon un second modèle prédéfini, dans laquelle le second modèle prédéfini met en correspondance des taux de variation du paramètre avec des taux de variation de puissance de refroidissement cible.

4. Unité de commande de refroidissement (10) selon l'une quelconque des revendications précédentes, dans laquelle le module de mesure (12) est configuré pour détecter une intensité de courant électrique et/ou une puissance électrique dudit courant électrique, en tant que ledit paramètre.

5. Unité de commande de refroidissement (10) selon l'une quelconque des revendications précédentes 1 à 3, dans laquelle le module de mesure (12) est configuré pour lire ladite instruction de commande, l'instruction de commande correspondant à une puissance de fonctionnement cible de l'unité de déviation laser (32).

6. Système laser (100) comprenant :

un dispositif de traitement laser (30) pour traiter au laser une pièce à usiner (W), le dispositif de traitement laser (30) comprenant une unité de déviation laser (32) pour dévier un faisceau laser (L) ;
un système de refroidissement (20) configuré pour refroidir le dispositif de traitement laser (30), en particulier ladite unité de déviation laser (32) ; et
une unité de commande de refroidissement (10) selon l'une quelconque des revendications précédentes connectée au système de refroidissement (20) et configurée pour commander une puissance de refroidissement du système de refroidissement (20) sur la base d'un paramètre d'une entrée de puissance électrique reçue par l'unité de déviation laser (32) du dispositif de traitement laser (30) et détectée par l'unité de commande de refroidissement (10).

7. Système laser (100) selon la revendication 6, dans lequel le dispositif de traitement laser (30) comprend en outre un dispositif de génération de lumière laser (34) pour générer un faisceau laser.

8. Système laser (100) selon la revendication 6 ou 7, comprenant en outre un dispositif d'alimentation en puissance électrique (40) configuré pour fournir un courant électrique à l'unité de déviation laser (32), dans lequel l'unité de commande de refroidissement (10) est connectée au dispositif d'alimentation en puissance électrique (40), dans lequel le module de mesure (12) de l'unité de commande de refroidissement (10) est configuré pour lire à partir du dispositif d'alimentation en puissance électrique (40) un paramètre électrique d'un courant électrique fourni par le dispositif d'alimentation en puissance électrique (40) à l'unité de déviation laser (32), et dans lequel le module de régulation (14) de l'unité de commande de refroidissement (10) est configuré pour commander la puissance de refroidissement du système de refroidissement (20) sur la base dudit paramètre électrique.

9. Système laser (100) selon l'une quelconque des revendications 6 à 8, dans lequel le dispositif de traitement laser (30) comprend un circuit de commande interne (31) configuré pour mesurer un paramètre électrique d'un courant électrique qui est entré dans l'unité de déviation laser (32), dans lequel le module de mesure (12) de l'unité de commande de refroidissement (10) est connecté au circuit de commande interne (31) et configuré pour lire le paramètre électrique mesuré par le circuit de commande interne (12), dans lequel le module de régulation (14) de l'unité de commande de refroidissement (10) est configuré pour commander la puissance de refroidissement du système de refroidissement (20) sur la base dudit paramètre électrique.

10. Système laser (100) selon l'une quelconque des revendications 6 à 9, comprenant en outre un capteur électrique (50) configuré pour mesurer un paramètre électrique d'un courant électrique qui est entré dans l'unité de déviation laser (32),

dans lequel le module de mesure (12) de l'unité de commande de refroidissement (10) est connecté au capteur électrique (50) et configuré pour lire le paramètre électrique mesuré par le capteur électrique (50), dans lequel le module de régulation (14) de l'unité de commande de refroidissement (10) est configuré pour commander la puissance de refroidissement du système de refroidisse-

ment (20) sur la base du paramètre électrique mesuré par le capteur électrique (50).

11. Système laser (100) selon l'une quelconque des revendications 6 à 10, dans lequel le système de refroidissement (20) comprend une pompe de fluide de refroidissement (22) pour commander les conditions d'écoulement d'un fluide de refroidissement utilisé pour refroidir le dispositif de traitement laser (30), en particulier une unité de déviation laser (32) et/ou un dispositif de génération de lumière laser (34) de celle-ci, et un circuit de commande de température (24) pour commander la température du fluide de refroidissement,
dans lequel l'unité de commande de refroidissement (10) est configurée pour commander la pompe de fluide de refroidissement (22) et le circuit de commande de température (24), pour commander les conditions d'écoulement et la température du fluide de refroidissement, respectivement, sur la base du paramètre de la puissance électrique entrée.

12. Procédé de commande d'un système laser (100) selon l'une quelconque des revendications 6 à 11, dans lequel le procédé comprend :

la détection d'un paramètre d'une entrée de puissance électrique reçue par une unité de déviation laser (32) du dispositif de traitement laser (30) du système laser (100) et la détermination si le paramètre varie, dans lequel l'entrée de puissance électrique correspond à un courant électrique ou à une instruction de commande fournie à l'unité de déviation laser (32) ; et
si le paramètre varie, la commande du système de refroidissement (20) du système laser (100) pour faire varier une puissance de refroidissement du système de refroidissement (20) sur la base d'une variation du paramètre.

13. Procédé selon la revendication 12, dans lequel l'entrée de puissance électrique correspond audit courant électrique fourni à l'unité de déviation laser (32), dans lequel le courant électrique comprend de préférence un ou plusieurs parmi :

- un courant électrique généré par un dispositif d'alimentation en puissance connecté au dispositif de traitement laser (30) ;
- un courant électrique qui est entré dans le dispositif de traitement laser (30) ; et un courant électrique mesuré par un capteur électrique (50) connecté entre un dispositif d'alimentation en puissance et le dispositif de traitement laser (30) ;

dans lequel le paramètre est de préférence une intensité de courant électrique, une tension de courant électrique et/ou une puissance électrique.

14. Procédé selon la revendication 12, dans lequel l'entrée de puissance électrique correspond à ladite instruction de commande fournie à l'unité de déviation laser (32), dans lequel le paramètre correspond de préférence à un fonctionnement cible de l'unité de déviation laser (32) du dispositif de traitement laser (30) codé dans l'instruction de commande.

15. Procédé selon l'une quelconque des revendications 12 à 14, dans lequel la commande du système de refroidissement (20) du système laser (100) pour faire varier une puissance de refroidissement du système de refroidissement (20) sur la base de la variation du paramètre comprend la commande de conditions d'écoulement d'un fluide de refroidissement pour refroidir le dispositif de traitement laser (30), en particulier une unité de déviation laser (32) et/ou un dispositif de génération de lumière laser (34) de celle-ci, dans lequel les conditions d'écoulement comprennent de préférence une température et/ou une vitesse d'écoulement du fluide de refroidissement.

EP 4 431 222 B1

Fig. 1

Fig. 2

Fig .3

Fig. 4

Fig. 5

Detect value I of electric current intensity received by laser deflection unit of laser processing device

202

I varying?

203

YES

Control cooling system to vary cooling power based on variation of I

204

200

Fig. 6

200′

Detect velocity v at which mirror is to rotate

202′

v varying?

203′

YES

Control cooling system to vary cooling power based on variation of v

204′

Fig. 7

**EP 4 431 222 B1**

**Patent documents cited in the description**

- KR 101418054 B1